(19) Europäisches Patentamt
European Patent Office
Office européen des brevets

(11) **EP 3 825 800 A1**

(12) **EUROPEAN PATENT APPLICATION**

(43) Date of publication:
**26.05.2021 Bulletin 2021/21**

(51) Int Cl.:
**G05B 23/02** (2006.01)

(21) Application number: **20205142.1**

(22) Date of filing: **02.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **21.11.2019  JP 2019210526**

(71) Applicant: **Mitsubishi Heavy Industries, Ltd.**
**Chiyoda-ku**
**Tokyo 100-8332 (JP)**

(72) Inventors:
• **YAMASHINA, Yusuke**
  **Tokyo 100-8332 (JP)**
• **MYOJI, Tetsuya**
  **Tokyo 100-8332 (JP)**
• **YAMAMOTO, Hideaki**
  **Ritto-shi, Shiga 520-3080 (JP)**
• **YASUDA, Shusaku**
  **Yokohama-shi, Kanagawa 220-8401 (JP)**

(74) Representative: **Studio Torta S.p.A.**
**Via Viotti, 9**
**10121 Torino (IT)**

(54) **ANOMALY DETECTION DEVICE, METHOD OF DETECTING ANOMALY, AND PROGRAM**

(57) Problem

Provided are an anomaly detection device, a method of detecting an anomaly, and a program, which can deal with non-uniformity of tools due to individual differences.

Solving Means

An anomaly detection device includes: an initial-stage detection information acquisition unit that acquires detection information at an initial stage in a series of a machining step performed using one tool; a map-function identification unit that identifies a mapping function for mapping the detection information at the initial stage, on reference detection information; a wear-progress-stage detection information acquisition unit that acquires detection information at a wear progress stage that follows the initial stage in the series of the machining step; a map-function application unit that applies the mapping function to the detection information at the wear progress stage; an anomaly-degree calculation unit that calculates an anomaly degree indicating a degree of difference, from the reference detection information, of the detection information at the wear progress stage to which the mapping function is applied; and an anomaly detecting unit that detects an abnormality of the tool based on determination as to whether the anomaly degree exceeds an anomaly determination threshold value determined in advance.

FIG. 1

EP 3 825 800 A1

**Description**

Technical Field

The present disclosure relates to an anomaly detection device, a method of detecting an anomaly, and a program.

Background Art

Patent Document 1 discloses a service life prediction method in which a threshold value is set for each of time series dispersions of the maximum value and the minimum value of the value of a motor current used for driving a tool to determine abnormality of the tool. The service life prediction method described in Patent Document 1 sets and uses the threshold value in the following manner. The threshold value is set to an appropriate value obtained by testing the machining in advance under various types of conditions until a drill breaks. In addition, during mass production, the threshold value is corrected based on values obtained through performing tests in advance for materials, drill diameters, feed speeds, rotational speeds, and the like.

Citation List

Patent Literature

Patent Document 1: Japanese Patent No. 5301380

Summary of Invention

Technical Problem

Unfortunately, the service life prediction method described in Patent Document 1 does not deal with non-uniformity of tools due to individual differences, or changes in machining conditions (machining period, number of times of machining, or the like).
The present disclosure has been made to solve the problem described above, and an object of the present disclosure is to provide an anomaly detection device, a method of detecting an anomaly, and a program, which can deal with non-uniformity of tools due to individual differences or the like.

Solution to Problem

In order to solve the problem described above, an anomaly detection device according to the present disclosure includes: an initial-stage detection information acquisition unit configured to acquire detection information at an initial stage in a series of machining steps performed using one tool, a map-function identification unit configured to identify a mapping function used for mapping the detection information at the initial stage on reference detection information, a wear-progress-stage detection information acquisition unit that acquires detection information at a wear progress stage following the initial stage in the series of machining steps, a map-function application unit configured to apply the mapping function to the detection information at the wear progress stage, an anomaly-degree calculation unit configured to calculate an anomaly degree indicating a degree of difference, relative to the reference detection information, of the detection information at the wear progress stage to which the mapping function is applied, and an anomaly detection unit configured to detect an abnormality of the tool based on determination as to whether the anomaly degree exceeds an anomaly determination threshold value determined in advance.
Furthermore, a method of detecting an anomaly according to the present disclosure includes the steps of: acquiring detection information at an initial stage in a series of machining steps performed using one tool; identifying a mapping function used for mapping the detection information at the initial stage on reference detection information; acquiring detection information at a wear progress stage following the initial stage in the series of machining steps; applying the mapping function to the detection information at the wear progress stage; calculating an anomaly degree indicating a degree of difference, relative to the reference detection information, of the detection information at the wear progress stage to which the mapping function is applied; and detecting an abnormality of the tool based on determination as to whether the anomaly degree exceeds an anomaly determination threshold value determined in advance.
Furthermore, a program according to the present disclosure is a program that causes a computer to execute steps including: acquiring detection information at an initial stage in a series of machining steps performed using one tool; identifying a mapping function used for mapping the detection information at the initial stage on reference detection information; acquiring detection information at a wear progress stage following the initial stage in the series of machining steps; applying the mapping function to the detection information at the wear progress stage; calculating an anomaly degree indicating a degree of difference, relative to the reference detection information, of the detection information at the wear progress stage to which the mapping function is applied; and detecting an abnormality of the tool based on determination as to whether the anomaly degree exceeds an anomaly determination threshold value determined in advance.

Advantageous Effects of Invention

According to the anomaly detection device, the method of detecting an anomaly, and the program according to the present disclosure, it is possible to provide an anomaly detection device, a method of detecting an anomaly, and a program, which can deal with non-uniformity of tools due to individual differences.

Brief Description of Drawings

FIG. 1 is a block diagram illustrating an example of a configuration of an anomaly detection device according to an embodiment of the present disclosure.
FIG. 2 is a perspective view illustrating an example of a machine tool illustrated in FIG. 1.
FIG. 3 is a flowchart illustrating a procedure of a method of detecting an anomaly according to an embodiment of the present disclosure.
FIG. 4 is a waveform diagram illustrating an example of operation of the anomaly detection device according to an embodiment of the present disclosure.
FIG. 5 is a waveform diagram illustrating an example of operation of the anomaly detection device according to an embodiment of the present disclosure.
FIG. 6 is a waveform diagram illustrating an example of operation of the anomaly detection device according to an embodiment of the present disclosure.
FIG. 7 is a waveform diagram illustrating an example of operation of the anomaly detection device according to an embodiment of the present disclosure.
FIG. 8 is a schematic view used to describe an example of operation of the anomaly detection device according to an embodiment of the present disclosure.
FIG. 9 is a diagram illustrating a waveform used to describe an example of operation of the anomaly detection device according to an embodiment of the present disclosure.
FIG. 10 is a schematic view used to describe an example of operation of the anomaly detection device according to an embodiment of the present disclosure.
FIG. 11 is a schematic block diagram illustrating a configuration of a computer according to an embodiment of the present disclosure.

Description of Embodiments

First Embodiment

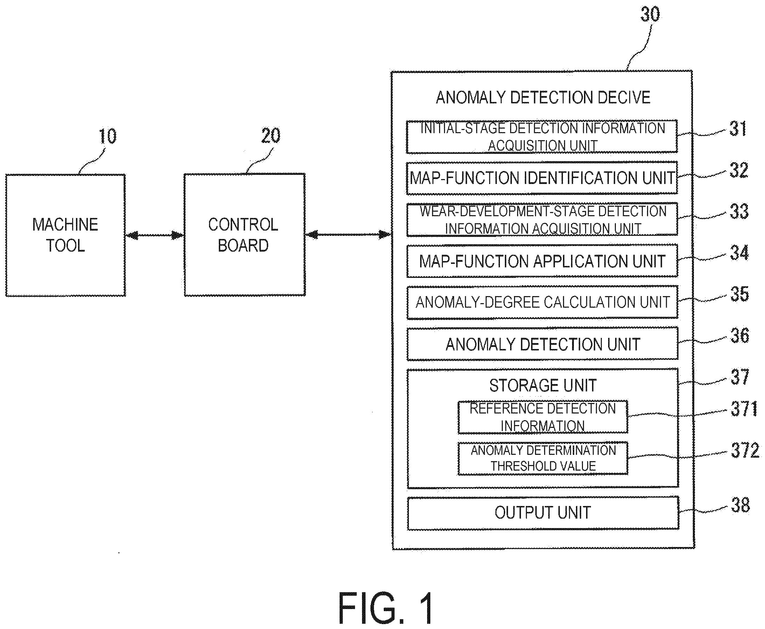

Below, an anomaly detection device and a method of detecting an anomaly according to embodiments of the present disclosure will be described with reference to FIGS. 1 to 11. Note that, in the drawings, the same reference signs are used for the same or corresponding configurations, and description thereof will not be repeated as appropriate.

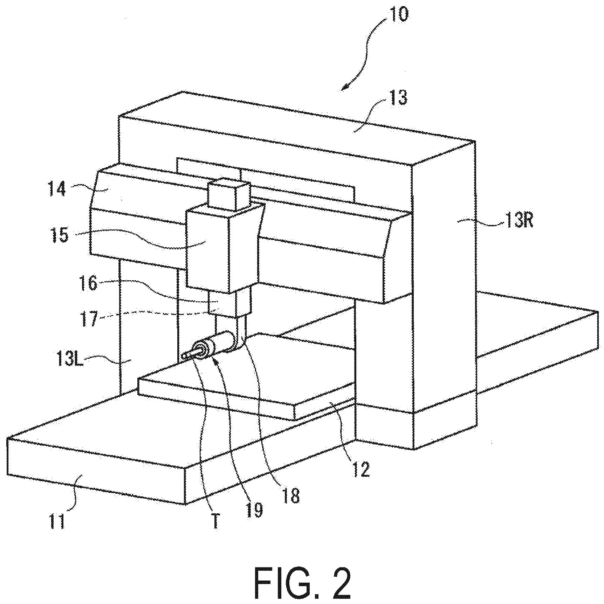

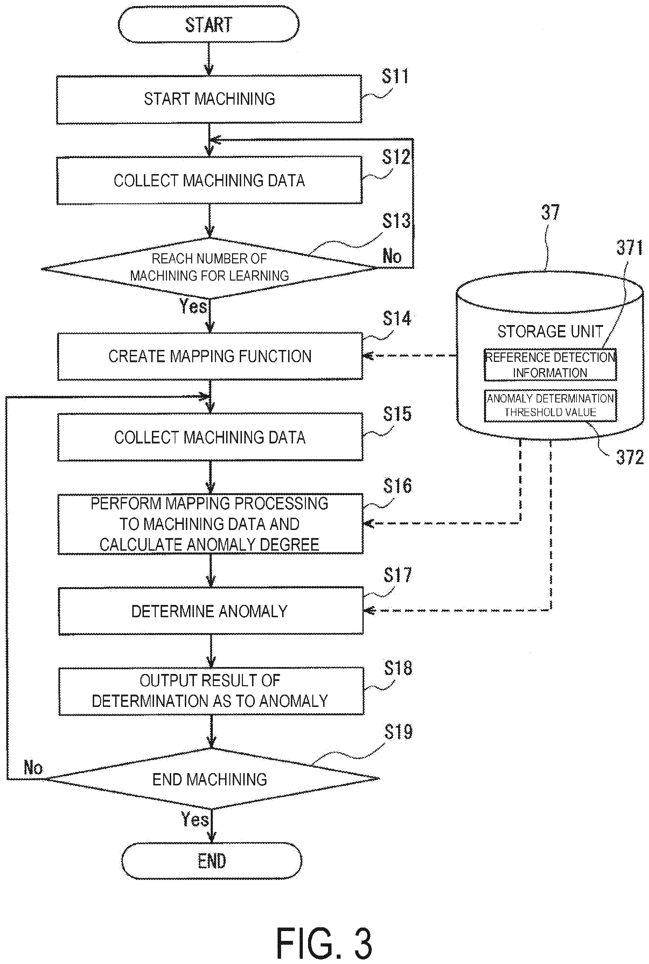

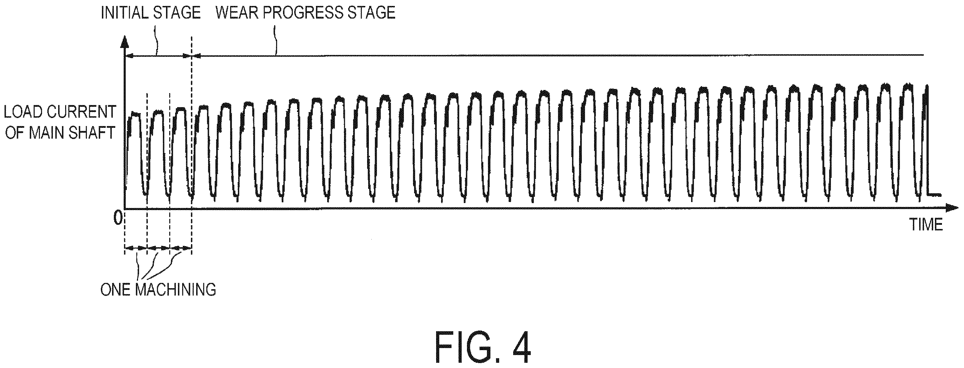

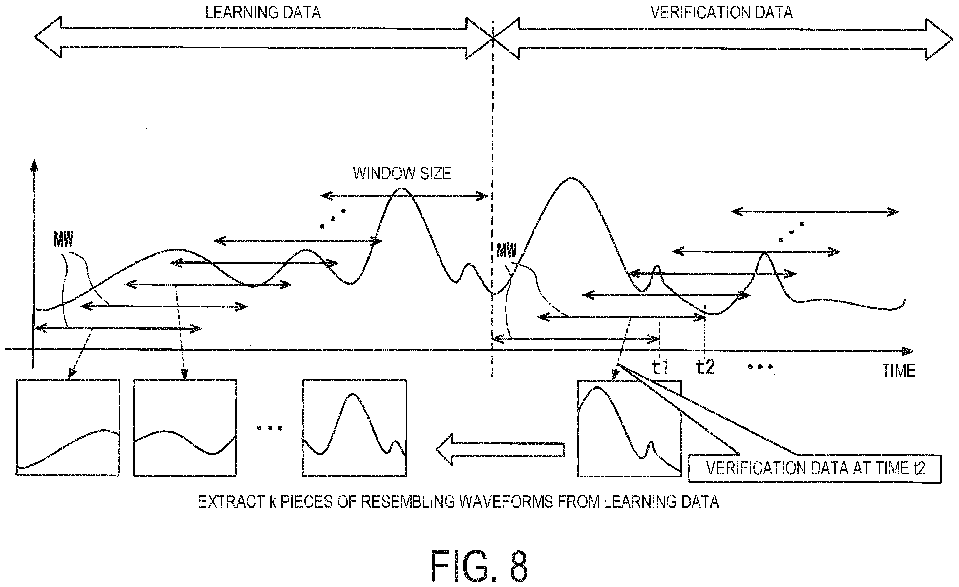

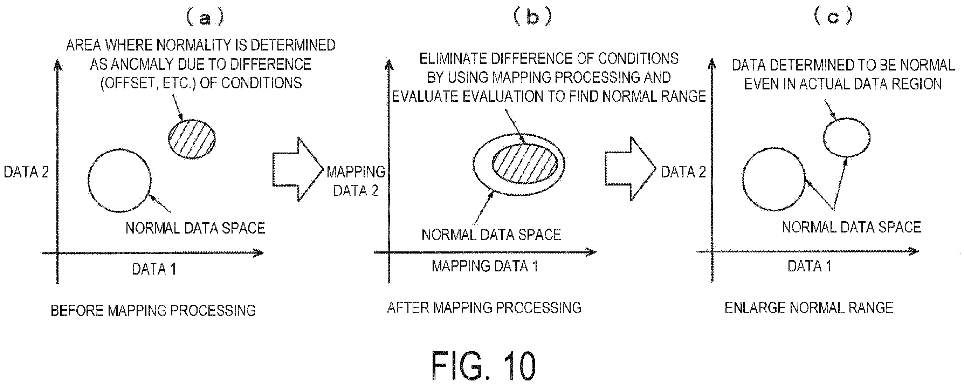

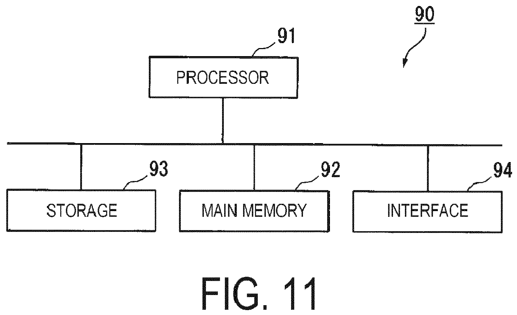

FIG. 1 is a block diagram illustrating an example of a configuration of an anomaly detection device 30 according to an embodiment of the present disclosure. FIG. 2 is a perspective view illustrating an example of a machine tool 10 illustrated in FIG. 1. FIG. 3 is a flowchart illustrating a procedure of a method of detecting an anomaly according to an embodiment of the present disclosure. FIGS. 4 to 7 and 9 are waveform diagrams each illustrating an example of operation of the anomaly detection device according to an embodiment of the present disclosure. FIGS. 8 and 10 are schematic diagrams each used to describe an example of operation of the anomaly detection device according to an embodiment of the present disclosure. FIG. 11 is a schematic block diagram illustrating a configuration of a computer according to an embodiment of the present disclosure.
The anomaly detection device 30 illustrated in FIG. 1 detects an abnormality of a tool included in the machine tool 10 controlled by a control board 20. There is no limitation as to the machine tool 10. The machine tool 10 may be a general machine tool used with numerical control (NC) or computer numerical control (CNC). However, in the present embodiment, it is assumed that the machine tool 10, which is the target of abnormality detection, is a gate-shaped machining tool (hereinafter, referred to as a gate-shaped machining tool 10) that is numerically controlled by the control board 20, as one example.

As illustrated in FIG. 2, in the present embodiment, the gate-shaped machining tool 10 includes a bed 11, a table 12, a column section 13, a cross rail 14, a saddle 15, a ram 16, a main shaft 17, an attachment 18, a tool unit 19, and a tool T.

The bed 11 is installed horizontally on a floor surface. The table 12 and the column section 13 are disposed on the bed 11. The table 12 is a table on which a workpiece (not illustrated) to be machined is mounted, and is provided so as to be movable in one horizontal direction on the bed 11. The column portion 13 has a gate shape disposed so as to straddle the bed 11, and includes a left column 13L and a right column 13R vertically provided respectively at the left and right of the bed 11. The cross rail 14 is mounted so as to horizontally traverse the left column 13L and the right column 13R, and is provided so as to be movable in the vertical direction along vertical sliding surfaces of the left column 13L and the right column 13R.

The saddle 15 is attached to the cross rail 14 and is provided so as to be movable in the horizontal direction along a horizontal sliding surface of the cross rail 14. The ram 16 is gripped by the saddle 15 and is provided so as to be movable in the vertical direction guided by the vertical sliding surface of the saddle 15. The main shaft 17 is disposed within the ram 16 and is able to rotate with a main shaft motor that is not illustrated. In addition, the tool unit 19 including the tool T is mounted at the main shaft 17 by using the attachment 18.

The gate-shaped machining tool 10 having the configuration described above includes, for example, a vibration sensor that measures vibration of the tool T (main shaft 17), a cutting force dynamometer that measures cutting force of the tool T (main shaft 17), and a sound sensor that measures sound of the tool T (main shaft 17), in order to detect an abnormality of the tool T, for example, in order to detect an abnormality of the tool T itself in terms of tool wear, tool breakage, chipping, or break, or an abnormal machining state caused by the tool T. Furthermore, a load current of the main shaft and an electric power value are measured from the main shaft motor that drives the main shaft 17. In addition, for example, a motor current and electric power values are measured from a feed motor (not illustrated) that drives the ram 16. Note that, in the present embodiment, a feed motor that drives the ram 16 is given as one example. However, a plurality of feed motors are provided so as to correspond to movement directions (for example, X, Y, and Z directions). The tool T includes, for example, a cutting tool or a grinding tool, and is replaced when a predetermined wear, break, or the like occurs in machining or grinding.

In the present embodiment, the gate-shaped machining tool 10 measures, for example, the load current of the main shaft, current values of each driving shaft in X, Y, and Z directions, and vibration values of each driving shaft in X, Y, and Z directions. The measured data (referred to as machining data) are sent to the anomaly detection device 30 by using a predetermined communication line through the control board 20. Note that the machining data may include, for example, the rotational speed of the main shaft, a feed speed, the amount of cutting, mechanical vibration, tool wear, a failure state, and the state of a machined surface.

The control board 20 performs numerical control of the gate-shaped machining tool 10 according to a preset program, and sends the machining data measured with the gate-shaped machining tool 10 to the anomaly detection device 30.

The anomaly detection device 30 is configured, for example, as a computer such as a personal computer. The anomaly detection device 30 includes an initial-stage detection information acquisition unit 31, a map-function identification unit 32, a wear-progress-stage detection information acquisition unit 33, a map-function application unit 34, an anomaly-degree calculation unit 35, an anomaly detection unit 36, a storage unit 37, and an output unit 38, each of which serves as a functional constituent element comprised of a combination of hardware included in the computer and software such as a program executed using the hardware. The storage unit 37 holds, for example, reference detection information 371, and an anomaly determination threshold value 372.

The initial-stage detection information acquisition unit 31 acquires detection information at an initial stage in a series of machining steps performed using one tool T. FIG. 4 shows results of measurement of the load current of the main shaft in the gate-shaped machining tool 10. Each peak of the load current of the main shaft corresponds to one cycle of machining (one cycle of numerical control). The present embodiment gives one example in which the initial stage is set to be a period of three cycles of machining, and a wear progress stage is set to be a period thereafter. The number of times of machining (number of machining cycles) at this initial stage is referred to as the number of machining for learning. However, for example, the initial stage may be set to be a period of one or two cycles of machining, or may be set to be a period of four or more cycles of machining. The detection information is the machining data described above and includes, for example, the load current of the main shaft, the current value of the drive shaft in each of the X, Y, and Z directions, and the vibration value of the drive shaft in each of the X, Y, and Z directions. Note that, in the anomaly detection device 30, the plurality of types of machining data are treated as multi-dimensional information (vector information).

The map-function identification unit 32 identifies a mapping function used for mapping the detection information at the initial stage on the reference detection information. The reference detection information includes at least the detection information at the initial stage as illustrated in FIG. 4. This detection information is measured in advance in a series of machining steps that are the same as those performed using another tool T having the same specifications as the tool T used at the time of acquiring the detection information at the initial stage (these tools T have the same specifications but different forms). The detection information at the initial stage corresponds, for example, to the detection information at the initial stage during mass production. The reference detection information corresponds, for example, to the detection information at the initial stage during prototype production or during the initial period of mass production.

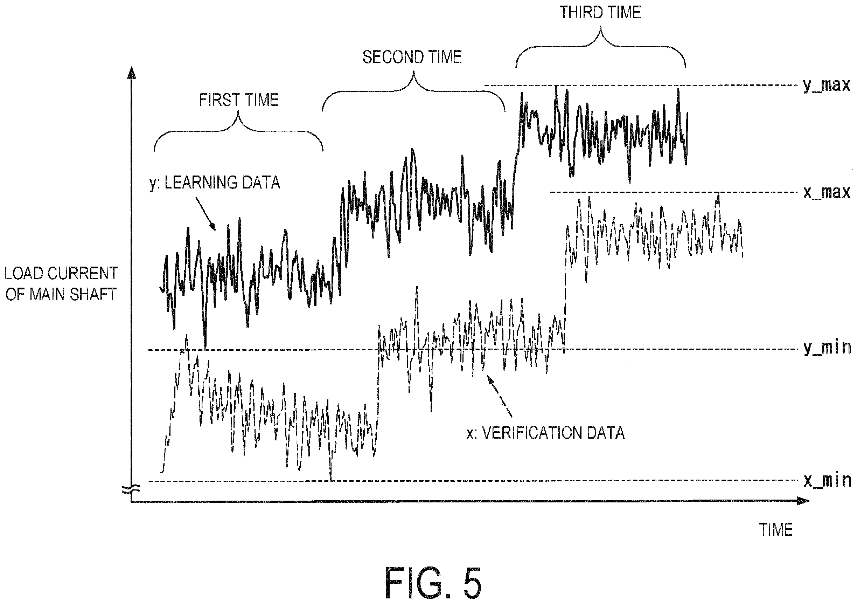

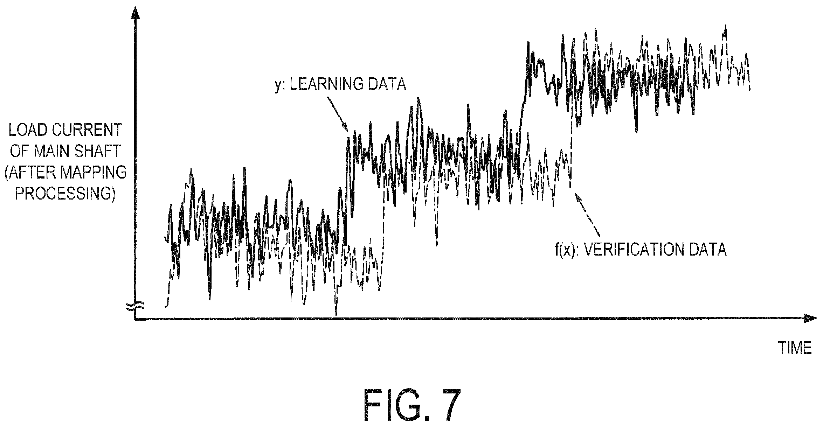

In the present embodiment, "mapping the detection information at the initial stage on the reference detection information" means, for example, that, in a case where there is a difference between the reference detection information (learning data y in FIG. 5) and the detection information (verification data x in FIG. 5) at the initial stage as illustrated in FIG. 5 (in a case where these pieces of information do not match), the detection information (verification data x) at the initial stage is brought (moved) closer to the reference detection information so that the difference reduces (so that these data match as much as possible), as illustrated in FIG. 7.

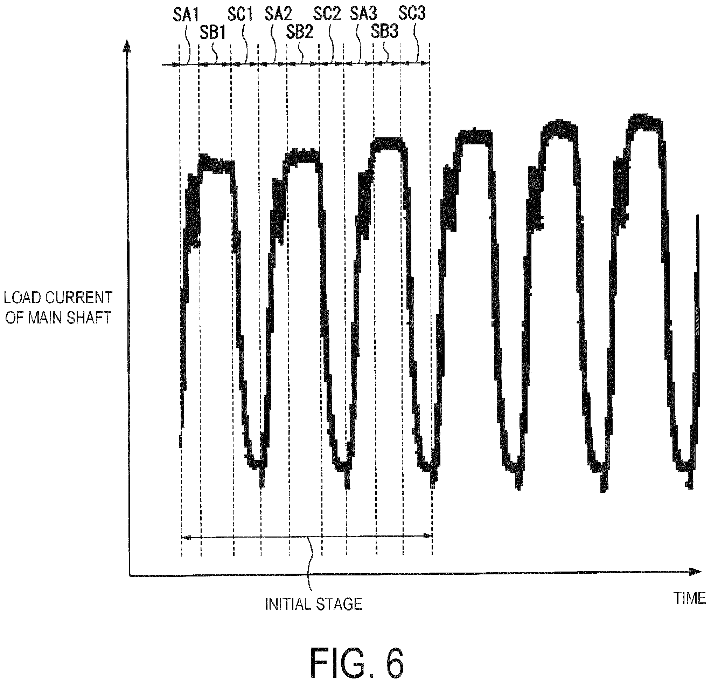

Note that FIGS. 5 and 7 each illustrate a waveform of the load current of the main shaft, the waveform being obtained by combining three periods SB1, SB2, and SB3 of the load current of the main shaft in a stationary state as illustrated in FIG. 6 so as to be continuous. The periods SB1, SB2, and SB3 in the stationary state correspond to a period in which periods SA1, SA2, and SA3, which are periods at the time of loading the tool T onto the workpiece, and the periods SC1, SC2, and SC3 after ending the machining are excluded from the initial stage.

A mapping function f is expressed as the following equation, where the learning data y is the reference detection information and the verification data x is the detection information at the initial stage.

[Equation 1]

$$y = f(x)$$

The mapping function f can also be set to be the function expressed, for example, as the following equation by using a mean value x_mean, a maximum value x_max, and a minimum value x_min of the verification data x at the initial stage and a mean value y_mean, a maximum value y_max, and a minimum value y_min of the learning data y.

[Equation 2]

$$f(x) = \{x + (y\_mean - x\_mean)\}$$

$$\times \{(y\_max - y\_min)/(x\_max - x\_min)\}$$

The maximum value x_max and the minimum value x_min of the verification data x and the maximum value y_max and the minimum value y_min of the learning data y are illustrated in FIG. 5. In this case, mapping processing is a process in which a difference (offset) between the mean value y_mean of the learning data y and the mean value x_mean of the verification data x is added to the verification data x, and the resulting value is multiplied by a ratio of a difference between the maximum value y_max and the minimum value y_min of the learning data y relative to a difference between the maximum value x_max and the minimum value x_min of the verification data x. The mapping processing is a process in which offset and enlargement or reduction are combined.

Note that the map-function identification unit 32 identifies a mapping function f for each dimension (for each type) of multi-dimensional information serving as a plurality of types of machining data. However, some of or all of the mapping functions of the plurality of types of machining data may be shared.

Furthermore, the map-function identification unit 32 is able to use the following conditions to evaluate the success or failure of the mapping. For example, the map-function identification unit 32 checks conditions such as whether or not the maximum values of both data are less than or equal to a certain percentage, whether or not the minimum values of both data are less than or equal to a certain percentage, whether or not a root mean square error (RMSE) is less than or equal to a certain percentage, or whether or not a certain percentage or more of the verification data is included in a range from the maximum to the minimum of the learning data. In a case where the condition is not met, it is possible to change the amount of offset or the amount of enlargement or reduction to make re-evaluation, or to end the process due to no mapping function being identified.

Furthermore, the wear-progress-stage detection information acquisition unit 33 acquires detection information at the wear progress stage as illustrated in FIG. 4, the wear progress stage following the initial stage in the series of machining steps.

The map-function application unit 34 applies the mapping function f to the detection information at the wear progress stage. In other words, the mapping function f is applied to the detection information (verification data x) at the wear progress stage to calculate detection information (f(x)) at the wear progress stage to which the mapping function f is applied.

The anomaly-degree calculation unit 35 calculates the degree of anomaly indicating the degree of difference of the detection information (f(x)) at the wear progress stage to which the mapping function f is applied, with respect to the reference detection information. For example, the degree of anomaly can be set as a distance of pieces of multi-dimensional information between the reference detection information (multi-dimensional information on the machining data obtained, for example, at the time of prototype production) and the detection information (f(x)) (data (mapped data) obtained by applying mapping processing to the multi-dimensional information on the machining data obtained, for example, at the time of mass production) at the wear progress stage to which the mapping function f is applied. The distance between pieces of the multi-dimensional information can be set, for example, as an L2 norm (Euclidean distance). The anomaly-degree calculation unit 35 calculates one degree of similarity on the basis of the multi-dimensional information.

Note that in the present embodiment, the anomaly-degree calculation unit 35 uses a k-nearest neighbor algorithm (kNN; k-neighbor method), which is one machine learning technique, to calculate the degree of anomaly. The anomaly-degree calculation unit 35 first learns waveforms while moving a movement window MW, as illustrated in FIG. 8. Here, as the size of the movement window MW becomes shorter, the sensitivity becomes sharper. Next, the anomaly-degree calculation unit 35 extracts k pieces of similar waveforms from the learning data. Then, the anomaly-degree calculation unit 35 calculates the average of the k pieces of distances as the degree of anomaly.

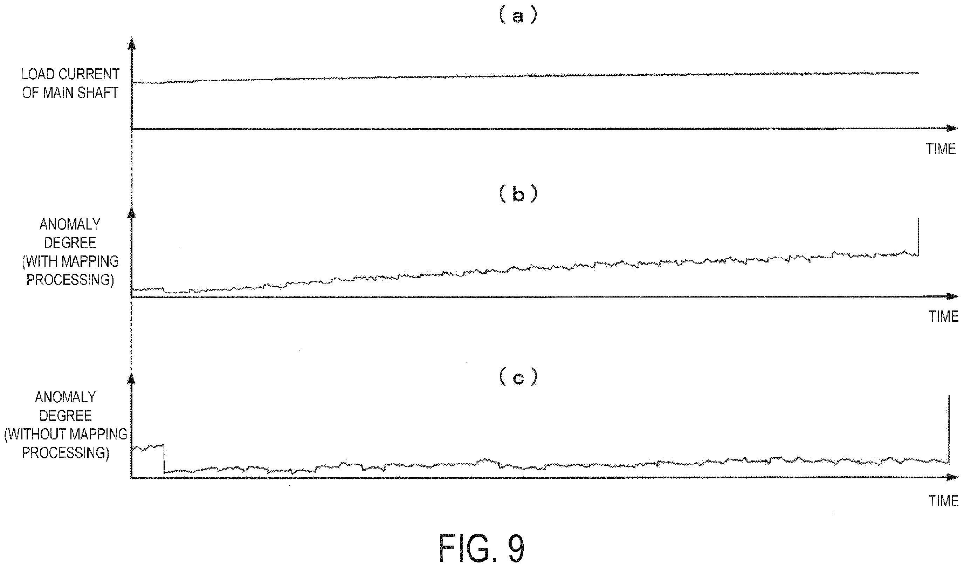

FIG. 9 illustrates examples of results of calculation of the abnormalities. FIG. 9(a) illustrates a waveform in which the period SB1 or the like in the stationary state described with reference to FIG. 6 is extracted from a waveform of the load current of the main shaft illustrated in FIG. 4, and the initial stage to the wear progress stage are coupled. FIG. 9(b) illustrates an example of the degree of similarity calculated by the anomaly-degree calculation unit 35 on the basis of mapping data obtained by applying mapping processing to the multi-dimensional information on the machining data including the load current of the main shaft illustrated in FIG. 9(a). FIG. 9(c) illustrates an example of the degree of similarity calculated by the anomaly-degree calculation unit 35 for reference on the basis of the multi-dimensional information including the load current of the main shaft illustrated in FIG. 9(a), to which no mapping processing is performed. The degree of similarity in FIG. 9(c) does not show any tendency of large increase from the first machining (for example, machining of a first groove). On the other hand, the degree of similarity according to the present embodiment illustrated in FIG. 9(b) confirms a tendency of increase in the degree of anomaly, and also confirms the effect obtained by the mapping processing.

In addition, the anomaly detection unit 36 detects an abnormality of the tool T on the basis of determination as to whether or not the degree of anomaly exceeds an anomaly determination threshold value set in advance. The anomaly determination threshold value can be set by using, as a reference, the degree of similarity as illustrated in FIG. 9(b) based on the learning data and the waveform at the wear progress stage following the waveform at the initial stage at the time when the learning data is acquired (for example, at the time of prototype production). For example, in a case where breakage occurs in the tool T at the wear progress stage, the anomaly determination threshold value can be set by using the degree of similarity immediately before the occurrence of breakage as a reference. In addition, in a case where breakage does not occur in the tool T at the wear progress stage (for example, in a case where the tool T is replaced because the amount of wear is large during inspection after the end of machining or the like), the anomaly determination threshold value can be set by using, as a reference, the degree of similarity at the latest check before the replacement. However, the anomaly determination threshold value in a case where no breakage occurs may be updated by using, as a reference, the maximum degree of similarity calculated at the time, for example, of mass production without occurrence of breakage after that.

The storage unit 37 holds, for example, the reference detection information 371 and the anomaly determination threshold value 372.

Furthermore, the output unit 38 outputs a signal indicating the result of determination by the anomaly detection unit 36. The output can be made, for example, in a manner in which display is performed on a monitor (not illustrated), a signal indicating that an anomaly is detected or that no anomaly is detected is sent to the control board 20, or the like. In addition, outputting to a monitor or the like may include, for example, displaying a graph or numerals of the degree of similarity as illustrated, for example, in FIG. 9(b) or the amount of wear of the tool T estimated on the basis of the degree of similarity.

Next, an example of operation of the anomaly detection device 30 will be described with reference to FIG. 3. Note that the reference detection information 371 and the anomaly determination threshold value 372 are stored in advance in the storage unit 37.

In the process illustrated in FIG. 3, once machining starts (step S11), the initial-stage detection information acquisition unit 31 collects machining data from the control board 20 (step S12) until reaching the number of machining for learning (until "Yes" in step S13).

Upon reaching the number of machining for learning ("Yes" in step S13), the map-function identification unit 34 creates a mapping function f for each type (each dimension) of machining data on the basis of the collected machining data and the reference detection information 371 stored in the storage unit 37 (step S14).

Next, the wear-progress-stage detection information acquisition unit 33 collects the machining data (step S15). The map-function application unit 34 applies the mapping function f to the collected machining data to calculate mapped data. In addition, the anomaly-degree calculation unit 35 calculates the degree of anomaly on the basis of the machining data that has been subjected to mapping processing and the reference detection information 371 stored in the storage unit 37 (step S16).

Next, the anomaly detection unit 36 determines an anomaly on the basis of the calculated degree of anomaly and the anomaly determination threshold value 372 stored in the storage unit 37 (determines whether the degree of anomaly exceeds the anomaly determination threshold value 372) (step S17).

Next, the output unit 38 outputs the result of determination of the anomaly made by the anomaly detection unit 36 (step S18).

Next, the wear-progress-stage detection information acquisition unit 33 determines whether or not machining has ended (step S19). If machining has ended ("Yes" in step S19), the process illustrated in FIG. 3 ends. If machining has not ended ("No" in step S19), machining data are collected again (step S15).

Next, operational effects according to the present embodiment will be summarized with reference to FIG. 10. FIG. 10(a) schematically illustrates a range of normal data space based on multi-dimensional information in an actually-measured data space prior to mapping processing. FIG. 10(b) schematically illustrates a range of normal data space in a mapped data space based on the multi-dimensional information after the mapping processing. FIG. 10(b) schematically illustrates a range of normal data space in the real data space based on the multi-dimensional information after the mapping processing.

As illustrated in FIG. 10(a), in a case of using actually measured data before the mapping processing, there exists a region where an anomaly is determined because of a difference of conditions (because of offset due to individual differences or the like) even if it is actually normal. However, as illustrated in FIG. 10(b) or 10(c), by performing the mapping processing, the region where an anomaly is determined can be treated as being in a normal region, which makes it possible to expand the normal area. As described above, according to the present embodiment, the verification data such as offset data, which are all treated as being abnormal or falling outside the target, are mapped on the learning data (region), and this makes it possible evaluate using the same scale.

As described above, according to the present embodiment, it is possible to deal with non-uniformity of tools due to individual differences.

Note that, in the present embodiment, the degree of anomaly is calculated by using a machine learning technique, and the calculated degree of anomaly is monitored, which makes it possible to manage the service life of the tool. For example, the method of calculating the degree of anomaly includes calculating, as the degree of anomaly, the distance between data using kNN. However, the method is not limited to kNN. For example, it is possible to use a local outlier factor (Lof), a variational bayesian method, or the like.

In addition, according to the present embodiment, machining data obtained at the time of machining with a tool performed for the first several times are mapped on data (reference detection information) for which a threshold value is set in advance to allow evaluation using a degree of anomaly equivalent to the reference detection information. Thus, it is possible to evaluate an anomaly by using a known threshold value.

Furthermore, in a case where data until a tool breaks has already been acquired through test machining, for example, the threshold value can be decided by using the data as a base. In addition, in a case where there is no data on wear or failure, the threshold value may be updated based on data on successful machining.

In a case where the mapping processing is not performed, the threshold value for determining an anomaly differs depending on machining conditions, tool types, materials, or the like, and cannot be uniquely decided. However, according to the present embodiment, the mapping processing absorbs the difference described above (machining conditions, types of tool, materials, or the like), which makes it possible to uniquely decide the threshold value.

According to the present embodiment, it is possible to detect an anomaly in a versatile manner without being affected by types of tool or machining, individual differences of a tool, and machining conditions. In addition, according to the present embodiment, it is possible to manage service life regardless of types of tool or machining, no error in detection occurs even if machining conditions change, and it is possible to evaluate a plurality of indices at the same time.

Other Embodiments

An embodiment according to the present disclosure has been described in detail with reference to the drawings.

However, the specific configuration of the present disclosure is not limited to this embodiment. Design change without departing from the main gist of the present disclosure or the like is also included. It should be noted that, in the embodiment described above, an anomaly is detected on the basis of the degree of anomaly. However, the embodiment is not limited to this. In combination with the degree of similarity or in place of the degree of similarity, it is possible to use a result of comparison between a probability density function based on the reference detection information and a probability density function based on the detection information, which are based on multi-dimensional information after mapping processing, a result of comparison between a difference between the maximum value and the minimum value based on the reference detection information and a difference between the maximum value and the minimum value based on the detection information, or the like. In addition, it may be possible to calculate the mean value of a plurality of indices, a weighted addition, or the like for each of the indices such as the degree of similarity, a probability density function, a difference between the maximum value and the minimum value, and use the result of calculation as the target of determination concerning detection of an anomaly.

The embodiment of the present invention has been described with reference to the drawings. However, the specific configuration of the present invention is not limited to the embodiment described above. Design change or the like without departing from the main gist of the present invention is also included.

Computer Configuration

FIG. 11 is a schematic block diagram illustrating the configuration of a computer according to the embodiment described above. A computer 90 includes a processor 91, a main memory 92, a storage 93, and an interface 94.

The anomaly detection device 30 described above is installed in the computer 90. Operations of each of the processing units described above are held in the form of programs in the storage 93. The processor 91 reads a program from the storage 93 to deploy the program in the main memory 92, and performs the process in accordance with the program. Furthermore, the processor 91 secures, in the main memory 92, a storage area corresponding to each of the storage units described above in accordance with the program.

The program may be a program for achieving part of the functions that the computer 90 is caused to work. For example, the program may be a program that achieves a function by combining with another program that has been stored in the storage or combining with another program installed on another device. Note that, in other embodiments, the computer may include a custom large scale integrated circuit (LSI) such as a programmable logic device (PLD), in addition to or in place of the configuration described above. Examples of the PLD include a programmable array logic (PAL), a generic array logic (GAL), a complex programmable logic device (CPLD), and a field programmable gate array (FPGA). In this case, part of or all of the functions achieved by the processor may be achieved using the integrated circuit.

Other examples of the storage 93 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory. The storage 93 may be an internal medium directly connected to a bus of the computer 90, or may be an external medium connected to the computer 90 through the interface 94 or a communication line. In addition, in a case where this program is distributed to the computer 90 through a communication line, the computer 90 that receives the distribution may develop this program on the main memory 92 to perform the process. In at least one of the embodiments, the storage 93 is a non-temporary tangible storage medium.

Notes

The anomaly detection device 30 according to each of the embodiments is construed, for example, in the following manner.

(1) An anomaly detection device 30 according to a first aspect includes: an initial-stage detection information acquisition unit 31 configured to acquire detection information at an initial stage in a series of machining steps performed using one tool T; a map-function identification unit 32 configured to identify a mapping function f used for mapping the detection information at the initial stage on reference detection information; a wear-progress-stage detection information acquisition unit 33 configured to acquire detection information at a wear progress stage following the initial stage in the series of machining steps; a map-function application unit 34 configured to apply the mapping function f to the detection information at the wear progress stage; an anomaly-degree calculation unit 35 configured to calculate an anomaly degree indicating a degree of difference, relative to the reference detection information, of the detection information at the wear progress stage to which the mapping function f is applied; and an anomaly detection unit 36 configured to detect an abnormality of the tool based on determination as to whether the anomaly degree exceeds an anomaly determination threshold value determined in advance.

(2) An anomaly detection device 30 according to a second aspect provides the anomaly detection device 30 according to the first aspect, in which the detection information includes multi-dimensional information, and the map-function identification unit 32 identifies the mapping function for each dimension of the multi-dimensional information. According to this configuration, even for multi-dimensional machining data, it is possible to deal with non-uniformity of tools due to individual differences or the like.

(3) An anomaly detection device 30 according to a third aspect provides the anomaly detection device 30 according to the first or second aspect, in which the detection information includes multi-dimensional information, and the anomaly-degree calculation unit 35 calculates the anomaly degree based on a distance between pieces of the multi-dimensional information. According to this configuration, even for multi-dimensional machining data, it is possible to deal with non-uniformity of tools due to individual differences or the like.

(4) An anomaly detection device 30 according to a fourth aspect provides the anomaly detection device 30 according to the first to third aspects, in which the anomaly determination threshold value is based on the anomaly degree based on the detection information at the wear progress stage following the initial stage at which the reference detection information is acquired. According to this configuration, it is possible to acquire the anomaly determination threshold value at the time of acquiring the reference detection information.

Reference Signs List

| | |
|---|---|
| 10 | Gate-shaped machining tool |
| 20 | Control board |
| 30 | Anomaly detection device |
| 31 | Initial-stage detection information acquisition unit |
| 32 | Map-function identification unit |
| 33 | Wear-progress-stage detection information acquisition unit |
| 34 | Map-function application unit |
| 35 | Anomaly-degree calculation unit |
| 36 | Anomaly detection unit |
| 37 | Storage unit |
| 38 | Output unit |
| 371 | Reference detection information |
| 372 | Anomaly determination threshold value |

**Claims**

1. An anomaly detection device comprising:

an initial-stage detection information acquisition unit configured to acquire detection information at an initial stage in a series of machining steps performed using one tool;

a map-function identification unit configured to identify a mapping function used for mapping the detection information at the initial stage on reference detection information;

a wear-progress-stage detection information acquisition unit that acquires detection information at a wear progress stage following the initial stage in the series of machining steps;

a map-function application unit configured to apply the mapping function to the detection information at the wear progress stage;

an anomaly-degree calculation unit configured to calculate an anomaly degree indicating a degree of difference, relative to the reference detection information, of the detection information at the wear progress stage to which the mapping function is applied; and

an anomaly detection unit configured to detect an abnormality of the tool based on determination as to whether the anomaly degree exceeds an anomaly determination threshold value determined in advance.

2. The anomaly detection device according to claim 1, wherein
the detection information includes multi-dimensional information, and the map-function identification unit identifies the mapping function for each dimension of the multi-dimensional information.

3. The anomaly detection device according to claim 1 or 2, wherein
the detection information includes multi-dimensional information, and the anomaly-degree calculation unit calculates the anomaly degree based on a distance between pieces of the multi-dimensional information.

4. The anomaly detection device according to any one of claims 1 to 3, wherein the anomaly determination threshold value is based on the anomaly degree based on the detection information at the wear progress stage following the initial stage at which the reference detection information is acquired.

5. A method of detecting an anomaly, comprising the steps of:

acquiring detection information at an initial stage in a series of machining steps performed using one tool;
identifying a mapping function used for mapping the detection information at the initial stage on reference detection information;
acquiring detection information at a wear progress stage following the initial stage in the series of machining steps;
applying the mapping function to the detection information at the wear progress stage;
calculating an anomaly degree indicating a degree of difference, relative to the reference detection information, of the detection information at the wear progress stage to which the mapping function is applied; and
detecting an abnormality of the tool based on determination as to whether the anomaly degree exceeds an anomaly determination threshold value determined in advance.

6. A program that causes a computer to execute steps including:

acquiring detection information at an initial stage in a series of machining steps performed using one tool;
identifying a mapping function used for mapping the detection information at the initial stage on reference detection information;
acquiring detection information at a wear progress stage following the initial stage in the series of machining steps;
applying the mapping function to the detection information at the wear progress stage;
calculating an anomaly degree indicating a degree of difference, relative to the reference detection information, of the detection information at the wear progress stage to which the mapping function is applied; and
detecting an abnormality of the tool based on determination as to whether the anomaly degree exceeds an anomaly determination threshold value determined in advance.

**30**

## ANOMALY DETECTION DECIVE

| INITIAL-STAGE DETECTION INFORMATION ACQUISITION UNIT | — 31 |

| MAP-FUNCTION IDENTIFICATION UNIT | — 32 |

| WEAR-DEVELOPMENT-STAGE DETECTION INFORMATION ACQUISITION UNIT | — 33 |

| MAP-FUNCTION APPLICATION UNIT | — 34 |

| ANOMALY-DEGREE CALCULATION UNIT | — 35 |

| ANOMALY DETECTION UNIT | — 36 |

### STORAGE UNIT — 37

| REFERENCE DETECTION INFORMATION | — 371 |

| ANOMALY DETERMINATION THRESHOLD VALUE | — 372 |

| OUTPUT UNIT | — 38 |

**10** MACHINE TOOL

**20** CONTROL BOARD

# FIG. 1

FIG. 2

**FIG. 3**

Flowchart:

START
↓
START MACHINING — S11
↓
COLLECT MACHINING DATA — S12
↓
REACH NUMBER OF MACHINING FOR LEARNING — S13 — No (loop back to COLLECT MACHINING DATA)
↓ Yes
CREATE MAPPING FUNCTION — S14
↓
COLLECT MACHINING DATA — S15
↓
PERFORM MAPPING PROCESSING TO MACHINING DATA AND CALCULATE ANOMALY DEGREE — S16
↓
DETERMINE ANOMALY — S17
↓
OUTPUT RESULT OF DETERMINATION AS TO ANOMALY — S18
↓
END MACHINING — S19 — No (loop back to COLLECT MACHINING DATA S15)
↓ Yes
END

STORAGE UNIT — 37
REFERENCE DETECTION INFORMATION — 371
ANOMALY DETERMINATION THRESHOLD VALUE — 372

FIG. 4

FIG. 5

EP 3 825 800 A1

FIG. 6

FIG. 7

LOAD CURRENT OF MAIN SHAFT (AFTER MAPPING PROCESSING)

y: LEARNING DATA

f(x): VERIFICATION DATA

TIME

EXTRACT k PIECES OF RESEMBLING WAVEFORMS FROM LEARNING DATA

FIG. 8

EP 3 825 800 A1

( a )

LOAD CURRENT
OF MAIN SHAFT

TIME

( b )

ANOMALY
DEGREE
(WITH MAPPING
PROCESSING)

TIME

( c )

ANOMALY
DEGREE
(WITHOUT MAPPING
PROCESSING)

TIME

FIG. 9

EP 3 825 800 A1

(a) BEFORE MAPPING PROCESSING

AREA WHERE NORMALITY IS DETERMINED AS ANOMALY DUE TO DIFFERENCE (OFFSET, ETC.) OF CONDITIONS

DATA 2

NORMAL DATA SPACE

DATA 1

MAPPING DATA 2

(b) AFTER MAPPING PROCESSING

ELIMINATE DIFFERENCE OF CONDITIONS BY USING MAPPING PROCESSING AND EVALUATE EVALUATION TO FIND NORMAL RANGE

NORMAL DATA SPACE

MAPPING DATA 1

DATA 2

(c) ENLARGE NORMAL RANGE

DATA DETERMINED TO BE NORMAL EVEN IN ACTUAL DATA REGION

NORMAL DATA SPACE

DATA 1

FIG. 10

FIG. 11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/228408 A1 (KAUSHAL SANJEEV [US] ET AL) 10 September 2009 (2009-09-10) <br> * paragraph [0071] - paragraph [0073] * <br> * paragraph [0081] * <br> * paragraph [0087] * <br> * paragraph [0091] * <br> * paragraph [0117] * <br> ----- | 1-6 | INV. <br> G05B23/02 |
| X | US 2019/210176 A1 (YAMAMOTO HIDEAKI [JP]) 11 July 2019 (2019-07-11) <br> * paragraph [0071] - paragraph [0075] * <br> ----- | 1,5,6 | |
| X | HABER R E ET AL: "Intelligent process supervision for predicting tool wear in machining processes", <br> MECHATRONICS, PERGAMON PRESS, OXFORD, GB, vol. 13, no. 8-9, <br> 1 October 2003 (2003-10-01), pages 825-849, XP004432021, <br> ISSN: 0957-4158, DOI: 10.1016/S0957-4158(03)00005-9 <br> * page 836, paragraph 2 - paragraph 4; figure 4 * <br> * page 840, paragraph 1 - paragraph 3 * <br> * page 845, paragraph 2 - paragraph 6 * <br> ----- | 1,5,6 | |

| | |
|---|---|
| | TECHNICAL FIELDS SEARCHED (IPC) |
| | G05B |

The present search report has been drawn up for all claims

| Place of search | Date of completion of the search | Examiner |
|---|---|---|
| The Hague | 6 April 2021 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 20 5142

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2021

| Patent document cited in search report | | Publication date | Patent family member(s) | | Publication date |
|---|---|---|---|---|---|
| US 2009228408 | A1 | 10-09-2009 | CN | 102016730 A | 13-04-2011 |
| | | | JP | 5405499 B2 | 05-02-2014 |
| | | | JP | 2011517806 A | 16-06-2011 |
| | | | KR | 20110043518 A | 27-04-2011 |
| | | | TW | 200951652 A | 16-12-2009 |
| | | | US | 2009228408 A1 | 10-09-2009 |
| | | | WO | 2009114382 A1 | 17-09-2009 |
| US 2019210176 | A1 | 11-07-2019 | CN | 109562500 A | 02-04-2019 |
| | | | JP | 6426667 B2 | 21-11-2018 |
| | | | JP | 2018024055 A | 15-02-2018 |
| | | | US | 2019210176 A1 | 11-07-2019 |
| | | | WO | 2018030033 A1 | 15-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5301380 B